(19) Europäisches Patentamt
European Patent Office
Office européen des brevets

(11) EP 4 370 567 B1

(12) **FASCICULE DE BREVET EUROPEEN**

(45) Date de publication et mention de la délivrance du brevet:
**12.03.2025 Bulletin 2025/11**

(21) Numéro de dépôt: **22744710.9**

(22) Date de dépôt: **06.07.2022**

(51) Classification Internationale des Brevets (IPC):
***C08F 293/00*** *(2006.01)* ***C08F 2/32*** *(2006.01)*

(52) Classification Coopérative des Brevets (CPC):
(C-Sets disponibles)
**C08F 293/005; C08F 2/32; C08F 220/1812; C08L 53/005;** C08F 2438/03 (Cont.)

(86) Numéro de dépôt international:
**PCT/EP2022/068709**

(87) Numéro de publication internationale:
**WO 2023/285230 (19.01.2023 Gazette 2023/03)**

(54) **PRÉPARATION DE POLYMÈRES SÉQUENCÉS AMPHIPHILES PAR POLYMÉRISATION RADICALAIRE MICELLAIRE INVERSE**

HERSTELLUNG VON AMPHIPHILEN BLOCKPOLYMEREN DURCH POLYMERISATION MIT MIZELLAREN REVERSEN RADIKALEN

PREPARATION OF AMPHIPHILIC BLOCK POLYMERS BY REVERSE RADICAL MICELLAR POLYMERISATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2021 FR 2107584**

(43) Date de publication de la demande:
**22.05.2024 Bulletin 2024/21**

(73) Titulaire: **SPECIALTY OPERATIONS FRANCE**
**69003 Lyon (FR)**

(72) Inventeurs:
- **WILSON, David James**
  **60580 Coye-La-Forêt (FR)**
- **CADIX, Arnaud**
  **59800 Lille (FR)**
- **THANKAPPAN, Hajeeth**
  **Dublin 6, D06 KP46 (IE)**

(74) Mandataire: **Valentino, Cédric**
**Specialty Operations France**
**Intellectual Assets Management (IAM)**
**85 rue des Frères Perret**
**RIC Lyon**
**BP62**
**69192 Saint-Fons (FR)**

(56) Documents cités:
**EP-A2- 0 172 025**
**WO-A1-2017/072035**
**WO-A1-2020/094963**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08L 53/005, C08K 5/01, C08K 5/103;**
C08F 220/1812, C08F 220/06

## Description

La présente invention a trait à un procédé de polymérisation donnant accès à des agents amphiphiles dispersibles en milieu huileux, qui sont utiles notamment à titre d'agents stabilisants pour des émulsions inverse (émulsions de type eau dans l'huile, comprenant des globules de phase aqueuse dispersées au sein d'une phase huileuse).

Pour stabiliser des émulsions inverses, il est connu d'employer des composés à caractère tensioactifs, typiquement solubles dans la phase huileuse, et propres à abaisser la tension de surface entre la phase aqueuse dispersée et la phase huileuse. Il a notamment été décrit l'emploi de polymères séquencés comprenant des blocs hydrophobes et des blocs hydrophiles, parmi lesquels on peut par exemple citer le Rhodibloc® RS disponible auprès de la société Solvay.

Un but de la présente invention est de fournir des nouveaux agents amphiphiles particulièrement adaptés à une utilisation en phase huileuse et permettant, entre autres, une bonne stabilisation des émulsions inverses.

A cet effet, il est proposé selon l'invention un procédé de polymérisation particulier, qui donne accès à des polymères séquencés amphiphiles qui possèdent une structure spécifique à savoir, schématiquement, à base d'un squelette formé d'unités lipophiles interrompu en différents endroits par des petites séquences hydrophiles, ces séquences hydrophiles ("blocs hydrophiles") étant toutes de taille sensiblement identiques.

Pour ce faire, dans le cadre de la présente invention, les travaux qui ont été réalisés par les inventeurs ont maintenant permis de développer une variante intéressante de la technique dite de "polymérisation radicalaire micellaire".

La "polymérisation radicalaire micellaire" (désignée également ici de façon plus concise par "polymérisation micellaire") est décrite par exemple dans US 4,432,881 ou bien encore dans Polymer, vol. 36, No.16, pp. 3197-3211 (1996). Cette technique particulière de polymérisation permet de synthétiser des polymères séquencés de type multiblocs par copolymérisation de monomères hydrophiles et de monomères hydrophobes au sein d'un milieu dispersant aqueux (typiquement de l'eau ou un mélange eau/alcool) qui comprend :

- les monomères hydrophiles à l'état solubilisé ou dispersé dans ledit milieu ;et
- les monomères hydrophobes au sein de micelles de tensioactif formées dans ledit milieu, en y introduisant ce tensioactif à une concentration supérieure à sa concentration micellaire critique (cmc).

En polymérisation micellaire, les monomères hydrophobes contenus dans les micelles sont dits en "solution micellaire". La solution micellaire à laquelle il est fait référence ici est un système micro-hétérogène qui est généralement isotrope, optiquement transparent et thermodynamiquement stable.

A noter qu'une solution micellaire du type de celle employée en polymérisation micellaire est à distinguer d'une microémulsion. En particulier, contrairement à une microémulsion, une solution micellaire se forme à toute concentration dépassant la concentration micellaire critique du tensioactif employé, avec comme seule condition que le monomère hydrophobe soit soluble au moins en une certaine mesure au sein de l'espace interne des micelles. Une solution micellaire se différencie par ailleurs d'une émulsion de par l'absence de phase homogène interne : les micelles contiennent un très faible nombre de molécules (moins de 1000 typiquement, en général moins de 500 et typiquement de 1 à 100, avec le plus souvent 1 à 50 monomères et au plus quelques centaine de molécules de tensioactif lorsqu'un tensioactif est présent) et la solution micellaire a en général des propriétés physiques similaires à celles des micelles de tensioactif sans monomères. Par ailleurs le plus souvent, une solution micellaire est transparente vis-à-vis de la lumière visible, compte tenu de la faible taille des micelles qui ne conduit pas à des phénomènes de diffusion contrairement aux gouttes d'une émulsion, qui réfractent la lumière et lui confère son aspect trouble ou blanc caractéristique.

La technique de polymérisation micellaire utilisant des solutions micellaires aqueuses de ce type conduit à des polymères séquencés caractéristiques qui contiennent chacun plusieurs blocs hydrophobes sensiblement de même taille et où cette taille peut être contrôlée. En effet, compte tenu du cantonnement des monomères hydrophobes au sein des micelles, chacun des blocs hydrophobes formés et de taille contrôlé et contient sensiblement un nombre $n_H$ défini de monomères hydrophobe, ce nombre $n_H$ pouvant être calculé comme suit (Macromolecular Chem. Physics, 202, 8, 1384-1397, 2001) :

$$n_H = N_{agg} . [M_H] / ( [tensioactif] - cmc)$$

où :

$N_{agg}$ est le nombre d'agrégation (nombre d'agrégation) du tensioactif, qui reflète le nombre de tensioactif présent dans chaque micelle

$[M_H]$ est la concentration molaire en monomère hydrophobe dans le milieu [tensioactif] est la concentration molaire en tensioactif dans le milieu ; et cmc est la concentration (molaire) micellaire critique

La technique de polymérisation micellaire permet ainsi un contrôle intéressant des motifs hydrophobes introduit dans les polymères formés, à savoir :

- un contrôle global de la fraction molaire d'unités hydrophobes dans le polymère (en modulant le rapport des concentrations des deux monomères); et
- un contrôle plus spécifique du nombre d'unités hydrophobes présentes dans chacun des blocs hydrophobes (en modifiant les paramètres influençant le $n_H$ défini ci-dessus).

Les inventeurs ont maintenant mis au point un procédé mettant en œuvre certains des principes de la de polymérisation micellaire, mais où le milieu dispersant employé n'est plus de l'eau ou une phase aqueuse, mais au contraire une phase huileuse hydrophobe. De façon assez inattendue, la transposition du procédé en milieu hydrophobe s'est avérée possible sous réserve d'adaptations techniques apportées par les inventeurs. De façon encore plus surprenante, la variante originale mise au point par les inventeurs permet d'obtenir des polymères très intéressants, qui se révèlent notamment bien adaptés pour modifier les propriétés d'un phase huileuse et notamment pour assure la stabilisation d'émulsions inverses et plus généralement pour stabiliser la dispersion de globules ou particules hydrophiles au sein d'une huile.

Plus précisément, selon un premier aspect, la présente invention a pour objet un procédé de préparation d'un copolymère séquencé, qui comprend une étape (E) de de polymérisation radicalaire, dite ici « polymérisation micellaire inverse », dans laquelle on met en contact, au sein d'un milieu huileux (M) :

- des monomères m1 solubilisés dans ledit milieu huileux (M) ;
- des monomères m2, non solubles dans le milieu (M), et présents sous la forme d'une solution micellaire, à savoir contenus dans des micelles dispersées au sein du milieu (M) ;
- au moins un amorceur de polymérisation radicalaire, cet amorceur étant typiquement soluble ou dispersible dans le milieu (M) ; et
- optionnellement (et de préférence), au moins un agent de contrôle de polymérisation radicalaire.

Selon un autre aspect, l'invention a pour objet les polymères tels qu'obtenus selon les procédés comprenant une étape (E) du type précité.

L'étape (E) du procédé de l'invention met donc spécifiquement en œuvre un milieu (M) de type huile, avec des monomères m1 qui y sont solubilisés (on entend par ce terme que les monomères m1 sont solubilisables dans le milieu (M) et qu'ils y sont sous forme de solution ou de dispersion homogène) et des monomères m2 qui y sont présents sous forme de solution micellaire. La solution micellaire de monomère m2 n'est pas une émulsion : elle ne comprend pas de phase aqueuse dispersée dans le milieu (M), mais uniquement des micelles qui comprennent les monomères m2. De ce fait, le milieu (M) comprenant les monomères m1 et m2 dans les conditions de l'invention est généralement isotrope, optiquement transparent et thermodynamiquement stable.

Typiquement, les monomères m2 sont présents dans le milieu (M) au sein de micelles formées par des tensioactifs additionnels, introduits en plus des monomères m1 et m2 (ces micelles étant aisément obtenues en employant le tensioactif à une concentration supérieure à sa concentration micellaire critique). Ces tensioactifs forment des micelles avec un espace interne, à caractère typiquement hydrophile, où les monomères m2 sont solubles. La solution micellaire obtenue se présente alors sous forme de micelles contenant un faible nombre de molécules et la solution micellaire a en général des propriétés physiques similaires à celles des micelles de tensioactif sans monomères.

Alternativement, selon un mode plus spécifique, les monomères m2 utilisés en solution micellaires peuvent être des monomères qui, en eux-mêmes ont la propriété de former des micelles sans avoir besoin de leur adjoindre des tensioactifs additionnels (monomères m2 désignés ici par «auto-micellisables»). Selon ce mode très particulier, le tensioactif employé pour former les micelles peut être le monomère auto-micellisable lui-même, employé sans autre tensioactif, bien que la présence d'un tensioactif additionnel ne soit pas exclue.

Ainsi, au sens de la présente description, lorsqu'il est fait mention à des monomères m2 au sein de micelles de tensioactifs, cette notion englobe aussi bien (i) des monomères hydrophiles présent au sein de micelles de tensioactif autre que ces monomères que (ii) des monomères comprenant au moins une partie ou un bloc hydrophile et formant par eux-mêmes les micelles en milieu huileux. Les deux modes (i) et (ii) précités sont compatibles et peuvent coexister (monomères hydrophiles au sein de micelles formées par un autre monomère auto-micellisables par exemple, ou bien encore micelles comprenant une association de tensioactifs et de monomères auto-micellisables).

L'étape (E) de polymérisation micellaire inverse selon l'invention conduit à des polymères multiblocs qui portent l'empreinte de la mise en œuvre des monomères m2 sous forme de solution micellaire : l'étape (E) est schématiquement une polymérisation radicalaire en solution des monomères m1 (qui conduirait, en l'absence des micelles à des chaînes polymères constitués d'un enchaînement d'unités m1), mais la présence des micelles vient en quelque sorte perturber la croissance des chaînes, ce par quoi on obtient un squelette formé par la polymérisation des monomères m1 interrompu en

différents endroits par des petites séquences hydrophiles, chacune de ces séquences étant formée par la polymérisation de monomères m2 contenues dans une micelle rencontrée par la chaîne en croissance. Comme chacune des micelles de la solution micellaire comporte sensiblement la même quantité de monomères m2, toutes les séquences hydrophiles ("blocs hydrophiles") interrompant la chaîne hydrophobe sont de taille sensiblement identique. Ainsi, une chaîne polymère obtenue selon l'étape (E) a schématiquement la structure d'un « collier de perles », avec des petits blocs hydrophiles de taille homogène répartis le long d'une chaîne hydrophobe. Un des avantages du procédé de l'invention est que la taille des blocs hydrophiles peut être facilement modulée, simplement en jouant sur le nombre de monomères m2 présent dans chaque micelle (dans le cas où des tensioactifs additionnels sont introduits pour former les micelles par exemple, on peut typiquement jouer sur le rapport molaire monomère m2/tensioactif : plus ce rapport diminue et moins les micelles contiennent de monomères m2).

On préfère en général conduire l'étape (E) avec la présence additionnelle d'un agent de contrôle de la polymérisation radicalaire tel que décrit plus en détail ci-après, sans quoi la polymérisation micellaire inverse de l'étape (E) conduit certes à un contrôle fin de la taille des petits blocs hydrophobes, mais à une polymérisation plus erratique des unités monomères hydrophiles, ce qui conduit au final à des chaînes présentant la structure en collier de perles précitée, mais avec une inhomogénéité de la longueur des squelette hydrophobes, et donc à une répartition de masse moléculaire fortement polydispersée pour les chaînes obtenues. La mise en œuvre d'un agent de contrôle de la polymérisation radicalaire permet d'obtenir des repartions plus monodispersées et en outre un meilleur contrôle de la microstructure des polymères obtenus (à savoir la distribution des blocs hydrophobes au sein des différentes chaines), ce qui autorise au besoin un contrôle fin des propriétés des chaînes polymères obtenues.

De façon surprenante, les travaux des inventeurs ont maintenant mis en évidence que la polymérisation micellaire inverse conduite en présence d'agent de contrôle permet de conserver à la fois les avantages liées à la présence d'une solution micellaire (polymères séquencés comprenant des blocs hydrophiles de taille contrôlée) et ceux de la polymérisation radicalaire contrôlée (contrôle amélioré de la masse moléculaire moyenne des chaînes synthétisées et contrôle de la microstructure des polymères, avec notamment une homogénéité, d'une chaîne polymère à une autre, de la répartition des séquences hydrophiles au sein du squelette).

Les polymères tels qu'obtenus selon la présente invention peuvent être employés dans de nombreux domaines. Ils peuvent tout particulièrement être employés à titre d'agents tensioactifs dans un milieu huileux et notamment à titre de stabilisants d'une émulsion eau dans l'huile ou bien à titre de dispersants pour des particules hydrophiles dispersées dans une huile.

Plus généralement, ils peuvent être employés pour modifier un milieu huileux ou une interface entre un milieu huileux et un autre milieu, notamment pour former et/ou stabiliser une émulsion inverse ou un autre système dispersé comprenant :

- des gouttelettes d'eau ou d'un liquide hydrophile dispersées dans un milieu huileux ; ou bien
- des particules hydrophiles dispersés dans un milieu huileux.

Selon un troisième aspect, l'invention a pour objet cette utilisation particulière des polymères obtenus selon l'invention. L'invention a également pour objet les procédés de modification de milieux huileux employant ces polymères à titre d'agent tensioactifs. L'invention concerne également les émulsions de type eau-dans-l'huile ainsi que les dispersions de particules hydrophiles en milieu huileux comprenant au moins un polymère selon l'invention (typiquement à titre d'agents stabilisants et/ou dispersants).

Différentes caractéristiques et modes de réalisation de l'invention sont décrits plus en détails ci-après.

***Le milieu M employé dans l'étape (E)***

Le milieu (M) mis en œuvre dans l'étape de polymérisation micellaire inverse de l'invention est typiquement un milieu homogène. Ce milieu comprend le plus souvent un ou plusieurs composés hydrophobes formant une phase liquide plus ou moins visqueuse.

La nature du milieu M peut varier en une assez large mesure, sous réserve qu'il permette une solubilisation (ou à tout le moins une bonne dispersion) des monomères m1 et qu'il soit propre à la formation des micelles recherchées dans l'étape (E). A titre d'exemple de milieu (M) adapté à la mise en œuvre du procédé de l'invention, on peut notamment citer le cyclohexane ou bien encore les huiles paraffiniques telle que l'Exxsol D100.

***L'agent de contrôle de polymérisation radicalaire***

Par *"agent de contrôle de polymérisation radicalaire",* on entend, au sens de la présente description, un composé capable de rallonger le temps de vie des chaînes polymères en croissance dans une réaction de polymérisation et de conférer à la polymérisation un caractère vivant ou contrôlé. Cet agent de contrôle est typiquement un agent de transfert

réversible tel que mis en œuvre dans les polymérisations radicalaires contrôlées désignés sous la terminologie RAFT ou MADIX, qui mettent typiquement en œuvre un procédé de transfert réversible par addition-fragmentation, comme ceux décrits par exemple dans WO96/30421, WO 98/01478, WO 99/35178, WO 98/58974, WO 00/75207, WO 01/42312, WO 99/35177, WO 99/31144, FR2794464 ou WO 02/26836.

Selon un mode de réalisation intéressant, l'agent de contrôle de polymérisation radicalaire employé dans l'étape (E) est un composé qui comprend un groupe thiocarbonylthio -S(C=S)-. Ainsi, par exemple, il peut s'agir d'un composé qui comprend un groupe xanthate (porteur de fonctions -SC=S-O-), par exemple un xanthate. Selon un mode de réalisation particulier, l'agent de contrôle peut être porteur de plusieurs groupes thiocarbonylthio. Il peut éventuellement s'agir d'une chaîne polymère porteuse d'un tel groupe. D'autres types d'agent de contrôle peuvent être envisagés (par exemple du type de ceux employé en CRP ou en ATRP).

Un agent de contrôle bien adapté à la mise en œuvre de l'étape (E) répond à la formule (A) ci-dessous :

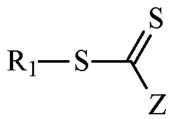

**Formule (A)**

dans laquelle :

- **Z** représente :

  un atome d'hydrogène,
  un atome de chlore,
  un radical alkyl éventuellement substitué, aryl éventuellement substitué,
  un hétérocycle éventuellement substitué,
  un radical alkylthio éventuellement substitué,
  un radical arylthio éventuellement substitué,
  un radical alkoxy éventuellement substitué,
  un radical aryloxy éventuellement substitué,
  un radical amino éventuellement substitué,
  un radical hydrazine éventuellement substitué,
  un radical alkoxycarbonyl éventuellement substitué,
  un radical aryloxycarbonyl éventuellement substitué,
  un radical carboxy, acyloxy éventuellement substitué,
  un radical aroyloxy éventuellement substitué,
  un radical carbamoyle éventuellement substitué,
  un radical cyano,
  un radical dialkyl- ou diaryl-phosphonato,
  un radical dialkyl-phosphinato ou diaryl-phosphinato, ou
  une chaîne polymère,

  et
- **$R_1$** représente :

  un groupe alkyle, acyle, aryle, aralkyle, alcène ou alcyne éventuellement substitué,
  un cycle carboné ou un hétérocycle, saturé ou non, aromatique éventuellement substitué, ou
  une chaîne polymère, de préférence hydrophile ou hydrodispersible lorsque l'agent est mis en œuvre dans l'étape (E).

Les groupes $R_1$ ou **Z,** lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, perfluoroalkyle $C_nF_{2n+1}$, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Les groupes alkyle, acyle, aryle, aralkyle ou alcyne éventuellement substitués présentent généralement 1 à 20

atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque $R_1$ ou Z est une chaîne polymère, cette chaîne polymère peut être issue d'une polymérisation radicalaire ou ionique ou issue d'une polycondensation.

Selon un mode particulier, l'agent de contrôle employé dans l'étape (E) est un composé non polymère porteur d'un groupement assurant le contrôle de la polymérisation radicalaire, notamment un groupe thiocarbonylthio -S(C=S)-.

Selon un autre mode envisageable, l'agent de contrôle employé dans l'étape (E) peut éventuellement être une chaîne polymère issue d'une polymérisation radicalaire contrôlée et porteuse d'un groupement propre à contrôler une polymérisation radicalaire (chaîne polymère dite de type « vivante », de type bien connu en soi). Ainsi, par exemple, l'agent de contrôle peut être une chaîne polymère (de préférence hydrophobe) fonctionnalisée en bout de chaîne par un d'une par un groupe xanthate ou plus généralement comprenant un groupe -SC=S-, par exemple obtenu selon la technologie MADIX.

On peut avantageusement utiliser comme agent de contrôle pour l'étape (E), des composés porteurs d'une fonction xanthate -S(C=S)O-, trithiocarbonate, des dithiocarbamate, ou dithiocarbazate, par exemple porteurs d'une fonction O-ethyl xanthate de formule $-S(C=S)OCH_2CH_3$ .

Les xanthates se révèlent tout particulièrement intéressants, notamment ceux porteur d'une fonction O-ethyl xanthate $-S(C=S)OCH_2CH_3$, comme le O-ethyl-S-(1-methoxycarbonyl ethyl) xanthate $(CH_3CH(CO_2CH_3))S(C=S)OEt$. Un autre agent de contrôle possible est le dibenzyltrithiocarbonate de formule $PhCH_2S(C=S)SCH_2Ph$ (où Ph=phényle). Un agent de contrôle intéressant est le Rhodixan A1 disponible auprès de la société Solvay.

Les travaux qui ont été réalisés par les inventeurs dans le cadre de la présente invention ont maintenant permis de mettre en évidence que lorsque l'étape (E) est conduite en présence d'un tel agent de contrôle de polymérisation radicalaire, elle conduit en général à :

- un contrôle de la masse moléculaire moyenne des chaînes polymère formées ;
- un contrôle de la distribution des blocs hydrophiles au sein des différentes chaînes ;
- l'obtention de chaînes polymères à caractère vivant, offrant ainsi la possibilité de préparer des polymères complexes à architecture contrôlée.

De façon assez inattendue, l'étape (E) permettent de conserver les avantages généraux de la polymérisation radicalaire contrôlée malgré la présence des micelles dans le milieu de polymérisation dont on aurait pu s'attendre à ce qu'elles affectent l'action des agents de contrôle. De ce fait, en employant un agent de contrôle de la polymérisation radicalaire, on peut facilement réaliser une polymérisation contrôlée des monomères présents au sein du milieu M de façon similaire à une polymérisation radicalaire contrôlée effectuée en milieu homogène, ce qui permet de prévoir et de contrôler très aisément la masse molaire moyenne du polymère synthétisé (cette masse est d'autant plus élevée que la concentration initiale en agent de contrôle dans le milieu est faible, cette concentration dictant le nombre de chaînes polymères en croissance). Dans le même temps, la présence de l'agent de contrôle ne nuit pas à l'effet intéressant observé du fait de la présence des monomères m2 en solution micellaire, à savoir un contrôle précis de la taille des blocs hydrophiles.

Dans les conditions de l'étape (E), il s'avère possible de contrôler la masse molaire moyenne en nombre des polymères jusqu'à des valeurs allant typiquement jusqu'à 300 000 g/mol, par exemple entre 5000 et 200 000 g/mol, par exemple entre 1000 et 150 000 g/l

Quelle que soit la taille des polymères synthétisés dans l'étape (E), ces polymères présentent une microstructure très contrôlée lorsqu'un agent de contrôle est employé, avec des chaînes sensiblement toutes similaires, comprenant des blocs hydrophobes répartis sensiblement de la même manière d'une chaîne polymère à une autre. Cette homogénéité de la distribution des blocs hydrophobes d'une chaîne à l'autre permet d'obtenir une population de polymère présentant tous des propriétés similaires, ce qui permet de fournir des compositions ayant des propriétés parfaitement ciblées et reproductibles. Les polymères obtenus selon l'invention se distinguent en cela des polymères généralement obtenus

en polymérisation micellaire, qui ont le plus souvent une répartition très large et très hétérogène de la distribution des blocs hydrophile au sein des différentes chaînes.

Lorsqu'un agent de contrôle de la polymérisation est employé, en particulier du type précité, on obtient typiquement à l'issue de l'étape (E) des polymères fonctionnalisés par des groupes de transfert (polymères vivants). Ce caractère vivant permet si on le souhaite, d'employer ces polymères à titre d'agent de contrôle dans une réaction de polymérisation radicalaire ultérieure, selon une technique bien connue en soi, ce qui permet une extension de la chaîne polymère obtenue dans l'étape (E). Alternativement, au besoin, il est possible de désactiver ou de détruire les groupes de transfert, par exemple par hydrolyse, ozonolyse, ou réaction avec des amines, selon des moyens connus en soi, ce par quoi les chaînes perdent leur caractère vivant.

Ainsi, selon un mode de réalisation particulier, le procédé de l'invention peut comprendre, après l'étape (E), une étape (E1) d'hydrolyse, d'oxydation, d'ozonolyse ou de réaction avec des amines, propre à désactiver et/ou détruire tout ou partie des groupes de transfert présents sur le polymère préparé dans l'étape (E).

***Les monomères m1***

A titre de monomères m1, on peut utiliser selon l'invention des monomères qui : (i) sont solubles dans le milieu (M) ; et (2) conduisent à la formation de polymères qui restent solubles dans le milieu (M)

Ces monomères sont typiquement lipophiles et hydrophobes.

A titre de monomères m1 particulièrement bien adaptés, notamment lorsque le milieu M est de cyclohexane ou une huile paraffinique, on peut notamment citer : l'acrylate de tertiobutyl, l'isobornyl (meth)acrylate l'acrylate de 2-ethylhexyl, l'acrylate de lauryle (LA), le methacrylate de lauryle (LMA), l'acrylate de stéaryle (SA) ; le méthacrylate de stéaryle (SMA); le (meth)acrylate de behenyle ; le (meth)acrylate d'oleyle et leurs mélanges.

Plus largement, à titre de monomères m1, on peut utiliser d'autres monomères hydrophobes, incluant notamment :

- les monomères vinylaromatiques tels que le styrène, l'alpha methylstyrène, le parachlorométhylstyrène, le vinyltoluène, le 2-methylstyrene, le 4-methylstyrene, le 2-(n-butyl)styrene, ou le 4-(n-decyl)styrene ;
- les composés vinyliques halogénés, tels que halogénures de vinyle ou de vinylidène, comme des chlorures ou fluorure de vinyle ou de vinylidene, répondant à la formule $R_bR_cC=CX^1X^2$, où :

  $X^1$ = F ou Cl
  $X^2$ = H, F ou Cl
  chacun de $R_b$ et $R_c$ représente, indépendamment :

    H, Cl, F ; ou
    un groupe alkyle, de préférence chloré et/ou fluoré, plus avantageusement perchloré ou perfluoré ;

- les esters d'acide mono-, di-carboxylique $\alpha,\beta$ éthyléniquement insaturés avec des alcanols en $C_2$-$C_{30}$, tels que, par exemple, l'ethacrylate de methyle, le (meth)acrylate d'ethyle, l'ethacrylate d'ethyle, le (meth)acrylate de n-propyle, le (meth)acrylate d'isopropyle, le (meth)acrylate de n-butyle, le (meth)acrylate de sec-butyle, le (meth)acrylate de tert-butyle, l'ethacrylate de tert-butyle, le (meth)acrylate de n-hexyle, le (meth)acrylate de n-heptyle, le (meth)acrylate de n-octyle, le (meth)acrylate de 1,1,3,3-tetramethylbutyle, le (meth)acrylate d'ethylhexyle, le (meth)acrylate de n-nonyle, le (meth)acrylate de n-decyle, le (meth)acrylate de n-undecyle, le (meth)acrylate de tridecyle, le (meth) acrylate de myristyle, le (meth)acrylate de pentadecyle, le (meth)acrylate de palmityle, le (meth)acrylate de heptadecyle, le (meth)acrylate de nonadecyle, le (meth)acrylate d'arachinyle, le (meth)acrylate de behenyle, le (meth)acrylate de lignoceryle, le (meth)acrylate de cerotinyle, le (meth)acrylate de melissinyle, le (meth)acrylate de palmitoleoyle, le (meth)acrylate d'oleyle, le (meth)acrylate de linolyle, le (meth)acrylate de linolenyle, le (meth) acrylate de stearyle, le (meth)acrylate de lauryle ; et leurs mélanges ;
- les esters d'alcool de vinyle ou d'allyle avec les acides monocarboxyliques en C1-C30, par exemple, le vinyl formate, le vinyl acetate, le vinyl propionate, le vinyl butyrate, le vinyl laurate, le vinyl stearate, le vinyl propionate, le vinyl versatate et leurs mélanges ;
- les nitriles éthyléniquement insaturés, tels que l'acrylonitrile, le methacrylonitrile et leurs mélanges ;
- les amides primaires d'acides mono- et di-carboxyliques $\alpha,\beta$ éthyléniquement insaturés et les dérivés de N-alkyle et N,N-dialkyle, tels que le N-(n-octyl)(meth)acrylamide, le N-(1,1,3,3-tetramethylbutyl)(meth)acrylamide, le N-ethylhexyl(meth)acrylamide, le N-(n-nonyl)(meth)acrylamide, le N-(n-decyl)(meth)acrylamide, le N-(n-undecyl)(meth) acrylamide, le N-tridecyl(meth)acrylamide, le N-myristyl(meth)acrylamide, le N-pentadecyl (meth)acrylamide, le N-palmityl(meth)acrylamide, le N-heptadecyl(meth)acrylamide, le N-nonadecyl(meth)acrylamide, le N-arachinyl(meth) acrylamide, le N-behenyl(meth)acrylamide, le N-lignoceryl(meth)acrylamide, le N-cerotinyl(meth)acrylamide, le N-melissinyl (meth)acrylamide, le N-palmitoleoyl(meth)acrylamide, le N-oleyl(meth)acrylamide, le N-linolyl(meth)acrylamide, le N-linolenyl(meth)acrylamide, le N-stearyl (meth)acrylamide et le N-lauryl(meth)acrylamide ;

- les N-vinyl-lactames et leurs dérivées tels que, la N-vinyl-5-ethyl-2-pyrrolidone, la N-vinyl-6-methyl-2-piperidone, la N-vinyl-6-ethyl-2-piperidone, le N-vinyl-7-methyl-2-caprolactame, le N-vinyl caprolactame et le N-vinyl-7-ethyl-2-caprolactame ;
- les esters d'acides mono- et di-carboxyliques α,β éthyléniquement insaturés avec aminoalcools, par exemple, le (meth)acrylate de N,N-dimethylaminocyclohexyle;

les monooléfines en C2-C8 et les hydrocarbures non aromatiques comprenant au par exemple, l'éthylène, le propylène, l'isobutylène, l'isoprène, le butadiène.

Selon un mode de réalisation préférentielle, les monomères hydrophobes employés selon l'invention, peuvent être choisis parmi :

- les esters alpha-bêta insaturés d'alkyle en C2-C30 alkyle, de préference d'alkyle en $C_4$-$C_{22}$, en particulier les acrylates et méthacrylate d'alkyle, comme les acrylates et méthacrylate de butyle, de 2-éthylhexyl, d'isooctyle, de lauryle, d'isodécyle ou de stéaryle (le méthacrylate de lauryle en particulier s'avère intéressant) ;
- les mélanges et association de deux ou plusieurs des monomères précités.

De préference, dans l'étape (E), tous les monomères m1 employés sont dissous au sein du milieu huileux (M).

***Les monomères* m2**

Il s'agit des monomères distincts des monomères m1 et qui, contrairement aux monomères m1, sont insolubles en tant que tels dans le milieu (M). Ils sont mis en œuvre dans l'étape (E) sous la forme d'une solution micellaire, à savoir à l'état dispersé au sein de micelles qui sont dispersées dans le milieu (M). Sous réserve qu'il puisse être intégrés dans des micelles de ce type, tout monomère de nature hydrophile peut être envisagé dans l'étape (E).

A titre d'exemple non limitatif de monomères m2 bien adaptés à la mise en œuvre de la polymérisation micellaire inverse de l'étape (E), on peut notamment citer l'acide acrylique (AA) ; l'hydroxyethyl methacrylate (HEMA) ; le N,N-diméthylacrylamide (DMA) ;et leurs mélanges

D'autres monomères adaptés à titre de monomères m2 incluent entre autres :

- les acides carboxyliques éthyléniquement insaturés, les acides sulfoniques et les acides phosphoniques, et/ou ses dérivés tels que l'acide acrylique (AA), l'acide méthacrylique, l'acide éthacrylique, l'acide α-chloro-acrylique, l'acide crotonique, l'acide maléique, l'anhydride maléique, l'acide itaconique, l'acide citraconique, l'acide mésaconique, l'acide glutaconique, l'acide aconitique, l'acide fumarique, les monoesters d'acides dicarboxyliques monoéthyléniquement insaturés comportant 1 à 3, de préférence 1 à 2, atomes de carbone, par exemple, le maléate de monométhyle, l'acide vinylsulfonique, l'acide (meth)allylsulfonique, l'acrylate de sulfoéthyle, le méthacrylate de sulfoéthyle, l'acrylate de sulfopropyle, le méthacrylate de sulfopropyle, l'acide 2-hydroxy-3-acryloyloxypropylsulfonique, l'acide 2-hydroxy-3-methacryloyloxypropylsulfonique, les acides styrenesulfoniques, l'acide 2-acrylamido-2-methylpropanesulfonique, l'acide vinylphosphonique, l'acide α-methyl vinylphosphonique et l'acide allylphosphonique ;
- les esters d'acides mono- et di-carboxyliques α,β-éthyléniquement insaturés avec C2-C3-alcanediols, par exemple, l'acrylate de 2-hydroxyethyle, le méthacrylate de 2-hydroxyethyle, l'éthacrylate de 2-hydroxyethyle, l'acrylate de 2-hydroxypropyle, le méthacrylate de 2-hydroxypropyle, l'acrylate de 3-hydroxypropyle, le méthacrylate de 3-hydroxypropyle et les (meth)acrylates de polyalkylène glycol;
- les amides d'acides mono-carboxyliques α,β-éthyléniquement insaturés et leurs dérivés N-alkyle et N,N-dialkyle tels que l'acrylamide, le méthacrylamide, le N-méthyl(meth)acrylamide, le N-ethyl(meth)acrylamide, le N-propyl(meth) acrylamide, le N,N-dimethyl(meth)acrylamide, le N,N-diethyl(meth)acrylamide, le morpholinyl(meth)acrylamide, et le metholyl acrylamide (l'acrylamide et le N,N-dimethyl(meth)acrylamide s'avèrent notamment intéressant) ;
- les N-vinyl-lactames et leurs dérivés, par exemple, le N-vinylpryolidone, le N-vinylpiperidone ;
- les composés N-vinylamide à chaînes ouvertes, par exemple, le N-vinylformamide, le N-vinyl-N-methylformamide, le N-vinylacetamide, le N-vinyl-N-methylacetamide, le N-vinyl-N-ethylacetamide, le N-vinylpropionamide, le N-vinyl-N-methylpropionamide et le N-vinylbutyramide ;
- les esters d'acides mono- et di-carboxyliques α,β-éthyléniquement insaturés avec les aminoalcools, par exemple, le (meth)acrylate de N,N-diméthylaminométhyle, le (meth)acrylate de N,N-dimethylaminoethyle, l'acrylate de N,N-diéthylaminoéthyle, et le (meth)acrylate de N,N-dimethylaminopropyle;
- les amides d'acides mono- et di-carboxyliques α,β-éthyléniquement insaturés avec les diamines comprenant au moins un groupe d'amino primaire ou secondaire, tels que le N-[2-(dimethylamino)ethyl]acrylamide, le N[2-(dimethylamino)ethyl]methacrylamide, le N-[3-(dimethylamino)propyl]acrylamide, le N-[3-(dimethylamino)propyl]methacrylamide, le N-[4-(dimethylamino)butyl]acrylamide et le N-[4-(dimethylamino)butyl]methacrylamide ;

- les N-diallylamines, les N,N-diallyl-N-alkylamines, leurs sels d'additions d'acide et leurs produits de quaternisation, l'alkyle employé ici étant préférentiellement C1-C3-alkyle ;
- les composés du N,N-diallyl-N-methylamine et du N,N-diallyl-N,N-dimethylammonium, par exemple, les chlorures et les bromures ;
- les hétérocylces azotés substitutés de vinyle et d'allyle, par exemple, le N-vinylimidazole, le N-vinyl-2-methylimidazole, les composés hétéroaromatiques substitués de vinyle et d'allyle, par exemple, le 2- et 4-vinylpyridine, le 2- et 4-allylpyridine, et leurs sels ;
- les sulphobétaines ; et
- les mélanges et association de deux ou plusieurs des monomères précités.

Au sens de la présente description, le terme « acide (meth)acrylique » englobe l'acide methacrylique, l'acide acrylique et leurs mélanges.

De la même façon, au sens de la présente description, le terme « (meth)acrylate » englobe le methacrylate, l'acrylate et leurs mélanges.

De la même façon, au sens de la présente description, le terme « (meth)acrylamide/(meth)acylamido », englobe le methacrylamide/le methacrylamido, l'acrylamide/l'acrylamido et leurs mélanges.

De préférence, les micelles de la solution micellaire de l'étape (E) ne contiennent pas de monomères à caractère hydrophobe. Par ailleurs, de préférence, tous les monomères hydrophobes employés dans l'étape (E) sont renfermés dans des micelles de la solution micellaire.

***La solution micellaire***

Pour réaliser la solution micellaire contenant les monomères m2 employés dans l'étape (E), on utilise typiquement des tensioactifs au moins dispersibles et avantageusement solubles dans le milieu (M), et qui sont en général présents dans ledit milieu à une concentration supérieure à leur concentration micellaire critique. Ces tensioactifs sont typiquement des tensioactifs ayant une faible HLB, typiquement inférieure à 9, par exemple inférieure ou égale à 7.

On préfère par ailleurs employer dans l'étape (E) des tensioactifs qui, à l'état isolé, se présentent sous forme liquide, plutôt que solide, dans les conditions de température de l'étape (E), et ce notamment pour faciliter leur dosage et leur dissolution dans le milieu (M) permettant l'obtention des micelles.

Les tensioactifs employés pour former les micelles de la solution micellaire sont par ailleurs des tensioactifs propres à solubiliser les monomères m2. Pour que les micelles de tensioactifs soient elles-mêmes propres à solubiliser les monomères m2, il est préférable, dans le cas général, que le rapport massique de la masse totale des tensioactifs présents dans le milieu (M) de l'étape (E) rapportée à la masse monomères m2 présents initialement dans le milieu (M) de l'étape (E) soit au moins égal à 0,6 : 1, par exemple supérieur ou égal à 0.7 : 1 ; plus avantageusement supérieur ou égal à 0.8 : 1 et notamment supérieur ou égal à 0.9 : 1 . Selon un mode de réalisation typique ce rapport est supérieur ou égal à 1 : 1. Ce rapport massique reste typiquement inférieur ou égal à à 5 : 1. Ainsi, le rapport massique de la masse totale des tensioactifs présents dans le milieu (M) de l'étape (E) rapportée à la masse monomères m2 présents initialement dans le milieu (M) de l'étape (E) est avantageusement compris entre 0.6 :1 et 5 :1 ; par exemple entre 0.7 :1 et 4 :1

A titre non limitatif, pour former les micelles de la solution micellaire de l'étape (E), on peut par exemple employer des tensioactifs choisis parmi les esters d'acides gras de sorbitane, comme par exemple le monooléate de sorbitane dit SMO (pour l'anglais « sorbitan monooleate ») ou bien encore le monostéarate de sorbitane, et les sulfosuccinates comme le sel soldique du Bis(2-ethylhexyl)sulfosuccinate (dit "AOT"). On peut par exemple employer des tensiaoctifs commerciaux tels que le SPAN® 80.

Ces tensioactifs sont avantageusement mis en œuvre en mélange avec un alcanolamide.

***Amorçage de la polymérisations radicalaire de l'étape (E)***

L'amorceur de la polymérisation radicalaire mis en œuvre dans l'étape (E) est de préférence soluble ou dispersible dans le milieu huileux (M).

L'amorceur (initiateur) de polymérisation radicalaire employé selon l'invention peut notamment être choisi parmi initiateurs suivants :

- les couples redox solubles dans un milieu huileux, comme par exemple le couple peroxyde de lauryle/N,N triméthyl aniline ;
- des initiateurs traités solubles en milieu huileux, du type du 2,2'-Azobis(2,4-dimethylvaleronitrile), par exemple
- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,

- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :

  - les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
  - les persulfates, perborate ou perchlorate de métaux alcalins ou d'ammonium en association avec un bisulfite de métal alcalin, tel que le métabisulfite de sodium, et des sucres réducteurs, et
  - les persulfates de métal alcalin en association avec un acide arylphosphinique, tel que l'acide benzène phosphonique et autres similaires, et des sucres réducteurs.

Typiquement, lorsqu'un agent de contrôle de la polymérisation est employé, la quantité d'initiateur à utiliser est de préférence telle que la quantité de radicaux générés soit d'au plus 50 % en mole, de préférence d'au plus 20% en mole, par rapport à la quantité d'agent de contrôle.

***Utilisation des polymères de l'invention***

Les polymères obtenus à l'issue de l'étape (E), et de l'éventuelle étape (E1) de désactivation/élimination des groupes de transfert présents sur le polymère préparé dans l'étape (E) sont, entre autres, utiles à titre de modificateur d'un milieu huileux ou d'une interface entre un milieu huileux et un autre milieu, notamment un milieu liquide hydrophile. Ils se révèlent tout particulièrement intéressants diminuer la tension de surface à des interfaces de type eau/huile et ils sont tout particulièrement adaptés pour stabiliser des émulsions inverses (ou plus généralement des systèmes comprenant des gouttelettes d'eau (ou de milieu aqueux) dispersées dans un milieu huileux). Plus spécifiquement, les polymères de l'invention se révèlent notamment intéressants à titre d'additifs dans des émulsions inverses incluant des tensioactifs (comme par exemple de la SMO) pour améliorer la stabilité à long terme la stabilité d'émulsions inverses
La nature des polymères synthétisable selon la présente invention est extrêmement modulable, ce qui autorise un choix très important autant sur le squelette que sur la présence de substituants, qui peuvent être judicieusement modulés en fonction des applications envisagés pour le polymère.
Différents aspects et avantages de l'invention seront encore illustrés par les exemples ci-après, dans lesquels des polymères ont été préparés selon le procédé de l'invention.

**EXEMPLES**

**EXEMPLE1**

**Préparation d'un polymère P1 de type poly(LA-co-AA) par polymérisation radicalaire micellaire inverse**

**Préparation d'une solution micellaire S1**

Dans une fiole en verre, on a introduit dans un volume de 10 mL d'Exxosol 1 g d'acide acrylique; et 4g de tensioactif Mackamide WS1. Le mélange a été agité pendant 30 minutes à l'aide d'un barreau aimanté, jusqu'à obtention d'un mélange visuellement limpide.

**Polymerisation micellaire inverse**

Dans un ballon à fond rond contenant un agitateur magnétique, on a introduit 18,10g d'acrylate de lauryle et 25,45g d'Exxsol D100. La solution obtenue a été purgée sous azote pendant 30 minutes, au bout desquelles a été ajoutée 0,064g de Rhodixan A1 , 7,6g de la solution micellaire S1 précédemment préparée et 0,082 g de 2,2'-Azobis(2,4-dimethylvaleronitrile). Le milieu a été dégazé par bullage d'azote pendant 1 heure. Le milieu réactionnel a ensuite été

placé dans un bain thermostaté à 65°C sous un flux d'azote pendant 5 heures et a 75°C pendant 8h.

A l'issue de la réaction, on a obtenu le **polymère P1,** avec un taux de conversion, déterminé par RMN, de 75%.

**Exemple 2**

**Préparation d'un polymère P2 de type poly(LA-co-AA) par polymérisation radicalaire micellaire inverse**

**Préparation d'une solution micellaire S2**

Dans une fiole en verre, on a introduit dans un volume de 10 mL d'Exxosol 1 g d'acide acrylique ; et 1g de tensioactif Mackamide WS1. Le mélange a été agité pendant 30 minutes à l'aide d'un barreau aimanté, jusqu'à obtention d'un mélange visuellement limpide.

**Polymerisation micellaire inverse**

Dans un ballon à fond rond contenant un agitateur magnétique, on a introduit 18,1 g d'acrylate de lauryle et 25,3 g d'Exxsol D100. La solution obtenue a été purgée sous azote pendant 30 minutes, au bout desquelles a été ajoutée 0,0512 g de Rhodixan A1, 7,6g de la solution micellaire S2 précédemment préparée et 0,082 g de 2,2'-Azobis(2,4-dimethylvaleronitrile). Le milieu a été dégazé par bullage d'azote pendant 1 heure. Le milieu réactionnel a ensuite été placé dans un bain thermostaté à 65°C sous un flux d'azote pendant 5 heures et a 75°C pendant 8h.

A l'issue de la réaction, on a obtenu le polymère P2, avec un taux de conversion, déterminé par RMN, de 88%.

**Exemple 3 (EXEMPLE COMPARATIF)**

**Préparation d'un polymère P3**

Dans cet exemple, polymérisation a été effectuée sans employer de solution micellaire.

Un mélange M d'acide acrylique AA et d'Exxsol 100 a été utilisé à la place, pour effectuer une synthèse similaire à celle des exemples 1 et 2, comme suit : dans une fiole en verre, on a introduit dans un volume de 10 mL d'Exxosol 1 g d'acide acrylique, sans tensioactif. Le mélange a été agité pendant 30 minutes à l'aide d'un barreau aimanté, ce par quoi on a obtenu un mélange trouble.

La polymérisation a été effectuée comme suit : dans un ballon à fond rond contenant un agitateur magnétique, on a introduit 18,3 g d'acrylate de lauryle et 25,2 g d'Exxsol D100. La solution obtenue a été purgée sous azote pendant 30 minutes, au bout desquelles a été ajoutée 0,064 g de Rhodixan A1, 7,6g du mélange M, trouble, précédemment préparée et 0,08 g de 2,2'-Azobis(2,4-dimethylvaleronitrile). Le milieu a été dégazé par bullage d'azote pendant 1 heure. Le milieu réactionnel a ensuite été placé dans un bain thermostaté à 65°C sous un flux d'azote pendant 5 heures et à 75°C pendant 8h.

A l'issue de la réaction, on a obtenu le polymère P3, avec un taux de conversion, déterminé par RMN, de 91%.

**Exemple 4**

**Utilisation des polymères des exemples 1** à **3 dans une émulsion inverse**

Les polymères P1 et P2 (selon l'invention) et le polymère P3 (comparatif), qui ont été synthétisés dans les exemples précédents, ont été testés à titre de stabilisant d'émulsions inverses dans les conditions ci-après.

Des émulsions inverses ont été préparées à température ambiante (25°C), comprenant, en masse par rapport à la masse totale du mélange :

28% d'une huile (Exxsol D100)
70% d'une solution aqueuse de NaCl 2M
1,7% de Span 80
0,3% d'un des polymère testés.

Chacune des émulsions a été préparée selon le même protocole, en variant uniquement le polymère testé, à savoir :

- dissolution du Span 80 et du polymère dans l'huile à température ambiante (25°C) sous agitation durant une minute ;
- addition de la solution aqueuse de NaCl 2M (saumure)

- émulsification sous Ultra Turrax à 13500 tours par minute pendant 5 minutes.

Chacune des émulsions obtenues a été divisée en plusieurs échantillons :

- 100 microlitres de l'émulsion ont été dilués dans 1900 microlitres d'Exxsol D100 pour des études de microscopie reflétant l'apparition ou non d'agglomérats.
- 45 mL de l'émulsion ont été utilisés pour mesurer initialement le rapport dit « oil split ratio » du volume d'huile séparée de l'émulsion sur le volume total de l'émulsion, qui est en pratique mesuré par le rapport de la hauteur de l'huile séparée sur la hauteur totale de liquide dans un tube de section constante. On a mesuré au départ ce rapport après centrifugation (« oil split ratio t=0 »).
- une portion de l'émulsion a été stockée dans un premier tube en verre de 15 cm de haut (l'émulsion étant ajouté jusqu'une hauteur de 13 cm), a été utilisé pour étudier la stabilité de l'émulsion à température ambiante
- Une seconde portion, stockée dans un second tube en verre identique, a été employée pour étudier la stabilité de l'émulsion à 50°C
- Au bout d'un mois, 45 mL de chacun des tubes de stockage ont été utilisés pour mesurer après stockage, respectivement à température ambiante et à 50°C, la quantité d'huile séparée de l'émulsion (« oil split ratio t=1m 25°C» et « oil split ration t=1m 50°C ») sans centrifugation.

Les résultats obtenus sont reportés dans le tableau ci-après :

| **polymère testé** | **présence d'agrégats** | **oil split ratio** | | |
|---|---|---|---|---|
| | | **t=0** après centrifugation (1) | **t=1m 25°C** | **t=1m 50°C** |
| **P1** | Non | 12% (4500 tr/min) | 1,2% | 3,1% |
| **P2** | Peu | 13% (4500 tr/min)) | 1,5% | 3,1% |
| **P3** | Très forte : échantillon rempli d'agrégats | 8% (2400 tr/min) | 1.2% | Déphasage |
| (1) Note : Les valeurs de 12 et 13% mesurées avec les polymère P1 et P2 avec une centrifugation de 4500 tr/min correspondent à des valeurs qui seraient de l'ordre de 3 à 4% avec une centrifugation de 2400 tr/min, donc bien moindre qu'avec le polymère comparatif P3. | | | | |

## Revendications

1. Procédé de préparation d'un copolymère séquencé, qui comprend une étape (E) de polymérisation radicalaire dans laquelle on met en contact, au sein d'un milieu huileux (M) :

   - des monomères m1 solubilisés dans ledit milieu huileux (M) ;
   - des monomères m2, non solubles dans le milieu (M), et présents sous la forme d'une solution micellaire, à savoir contenus dans des micelles dispersées au sein du milieu (M) ;
   - au moins un amorceur de polymérisation radicalaire, de préférence soluble ou dispersible dans le milieu (M) ; et
   - de préférence, un agent de contrôle de polymérisation radicalaire.

2. Procédé selon la revendication 1, qui met en œuvre un agent de contrôle de polymérisation radicalaire est un composé qui comprend un groupe thiocarbonylthio - S(C=S)-, par exemple un xanthate.

3. Procédé selon l'une des revendications 1 ou 2, où le milieu (M) est le cyclohexane ou bien une huile paraffinique.

4. Procédé selon l'une des revendications 1 à 3, où les monomères m1 sont choisis parmi l'acrylate de tertiobutyl, l'isobornyl (meth)acrylate, l'acrylate de 2-ethylhexyl, l'acrylate de lauryle (LA), le methacrylate de lauryle (LMA), l'acrylate de stéaryle (SA) ; le méthacrylate de stéaryle (SMA); le (meth)acrylate de behenyle ; le (meth)acrylate d'oleyle et leurs mélanges.

5. Procédé selon l'une des revendications 1 à 4, où les monomères m2 sont choisis parmi l'acide acrylique (AA) ; l'hydroxyethyl methacrylate (HEMA) ; le N,N-diméthylacrylamide (DMA) ;et leurs mélanges.

6. Procédé selon l'une des revendications 1 à 5, où les monomères m2 sont employés dans une solution micellaire

comprenant des tensioactifs ayant une HLB inférieure à 9.

7. Procédé selon la revendication 6, où le rapport massique de la masse totale des tensioactifs présents dans le milieu (M) de l'étape (E) rapportée à la masse monomères m2 présents initialement dans le milieu (M) de l'étape (E) est supérieur ou égal à 0,6 : 1, par exemple entre 0,6 :°1 et 5 :1.

8. Polymère susceptible d'être obtenu selon le procédé de l'une des revendications 1 à 7

9. Utilisation d'un polymère selon la revendication 8, pour modifier un milieu huileux ou une interface entre un milieu huileux et un autre milieu, notamment pour former et /ou stabiliser une émulsion inverse ou un autre système dispersé comprenant :

- des gouttelettes d'eau ou d'un liquide hydrophile dispersés dans un milieu huileux ; ou bien
- des particules hydrophiles dispersés dans un milieu huileux.

10. Emulsion eau-dans-l'huile ou dispersion de particules hydrophiles en milieu huileux, comprenant au moins un polymère selon la revendication 8.

## Patentansprüche

1. Ein Verfahren zur Herstellung eines Blockcopolymers, das einen Schritt (E) der radikalischen Polymerisation umfasst, bei dem die folgenden Komponenten in einem öligen Medium (M) in Kontakt gebracht werden:

- Monomere m1, die in dem öligen Medium (M) gelöst sind;
- Monomere m2, die in dem Medium (M) unlöslich sind und in Form einer mizellaren Lösung vorliegen, d.h. in Mizellen enthalten sind, die im Medium (M) dispergiert sind;
- mindestens ein radikalischer Polymerisationsinitiator, der vorzugsweise in dem Medium (M) löslich oder dispergierbar ist; und
- vorzugsweise ein radikalischer Polymerisationskontrollagent.

2. Das Verfahren nach Anspruch 1, bei dem ein radikalischer Polymerisationskontrollagent verwendet wird, der eine Verbindung ist, die eine Thiocarbonylthio-Gruppe -S(C=S)- umfasst, beispielsweise ein Xanthat.

3. Das Verfahren nach einem der Ansprüche 1 und 2, wobei das Medium (M) Cyclohexan oder ein flüssiges Paraffin ist.

4. Das Verfahren nach einem der Ansprüche 1 bis 3, wobei die Monomere m1 aus tert-Butylacrylat, Isobornyl(meth)acrylat, 2-Ethylhexylacrylat, Laurylacrylat (LA), Laurylmethacrylat (LMA), Stearylacrylat (SA), Stearylmethacrylat (SMA), Behenyl(meth)acrylat, Oleyl(meth)acrylat und deren Mischungen ausgewählt sind.

5. Das Verfahren nach einem der Ansprüche 1 bis 4, wobei die Monomere m2 aus Acrylsäure (AA), Hydroxyethylmethacrylat (HEMA), N,N-Dimethylacrylamid (DMA) und deren Mischungen ausgewählt sind.

6. Das Verfahren nach einem der Ansprüche 1 bis 5, wobei die Monomere m2 in einer mizellaren Lösung verwendet werden, die Tenside mit einem HLB von weniger als 9 umfasst.

7. Das Verfahren nach Anspruch 6, wobei das Gewichtsverhältnis des Gesamtgewichts der im Medium (M) des Schritts (E) vorhandenen Tenside zum Gewicht der im Medium (M) des Schritts (E) ursprünglich vorhandenen Monomere m2 größer oder gleich 0,6:1 ist, beispielsweise zwischen 0,6:1 und 5:1.

8. Ein Polymer, das nach dem Verfahren eines der Ansprüche 1 bis 7 erhalten werden kann.

9. Die Verwendung eines Polymers nach Anspruch 8 zur Modifizierung eines öligen Mediums oder einer Grenzfläche zwischen einem öligen Medium und einem anderen Medium, insbesondere zur Bildung und/oder Stabilisierung einer inversen Emulsion oder eines anderen dispergierten Systems, das umfasst:

- Wassertröpfchen oder eines hydrophilen Flüssigkeit, die in einem öligen Medium dispergiert sind; oder
- hydrophile Partikel, die in einem öligen Medium dispergiert sind.

**10.** Eine Wasser-in-Öl-Emulsion oder eine Dispersion von hydrophilen Partikeln in einem öligen Medium, die mindestens ein Polymer nach Anspruch 8 umfasst.

## Claims

1. A process for preparing a block copolymer, which comprises a step (E) of radical polymerization in which the following are brought into contact, in an oily medium (M):

    - monomers m1 dissolved in said oily medium (M);
    - monomers m2, which are insoluble in the medium (M) and which are present in the form of a micellar solution, i.e. contained in micelles dispersed in the medium (M);
    - at least one radical polymerization initiator, which is preferably soluble or dispersible in the medium (M); and
    - preferably a radical polymerization control agent.

2. The process as claimed in claim 1, using a radical polymerization control agent which is a compound which comprises a thiocarbonylthio -S(C=S)- group, for example a xanthate.

3. The process as claimed in one of claims 1 and 2, wherein the medium (M) is cyclohexane or a liquid paraffin.

4. The process as claimed in one of claims 1 to 3, wherein the monomers m1 are chosen from tert-butyl acrylate, isobornyl (meth)acrylate, 2-ethylhexyl acrylate, lauryl acrylate (LA), lauryl methacrylate (LMA), stearyl acrylate (SA), stearyl methacrylate (SMA), behenyl (meth)acrylate, oleyl (meth)acrylate and mixtures thereof.

5. The process as claimed in one of claims 1 to 4, wherein the monomers m2 are chosen from acrylic acid (AA), hydroxyethyl methacrylate (HEMA), N,N-dimethylacrylamide (DMA) and mixtures thereof.

6. The process as claimed in one of claims 1 to 5, wherein the monomers m2 are employed in a micellar solution comprising surfactants having an HLB of less than 9.

7. The process as claimed in claim 6, wherein the weight ratio of the total weight of surfactants present in the medium (M) of step (E) to the weight of monomers m2 initially present in the medium (M) of step (E) is greater than or equal to 0.6: 1, for example between 0.6:1 and 5:1.

8. A polymer which can be obtained according to the process of one of claims 1 to 7.

9. The use of a polymer as claimed in claim 8 for modifying an oily medium or an interface between an oily medium and another medium, particularly for forming and/or stabilizing an inverse emulsion or another dispersed system, comprising:

    - droplets of water or of a hydrophilic liquid dispersed in an oily medium; or
    - hydrophilic particles dispersed in an oily medium.

10. A water-in-oil emulsion or a dispersion of hydrophilic particles in an oily medium, comprising at least one polymer as claimed in claim 8.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4432881 A
- WO 9630421 A
- WO 9801478 A
- WO 9935178 A
- WO 9858974 A
- WO 0075207 A
- WO 0142312 A
- WO 9935177 A
- WO 9931144 A
- FR 2794464
- WO 0226836 A


### Littérature non-brevet citée dans la description


- *Polymer*, 1996, vol. 36 (16), 3197-3211
- *Macromolecular Chem. Physics*, 2001, vol. 202 (8), 1384-1397